# EUROPEAN PATENT SPECIFICATION

(11) **EP 2 878 836 B1**
(45) Date of publication and mention of the grant of the patent: **25.01.2017**
(21) Application number: 14183048.9
(22) Date of filing: 01.09.2014
(51) Int. Cl.: F16B 47/00

(54) **SUCTION CUP**
SAUGNAPF
VENTOUSE

(43) Date of publication of application: 03.06.2015
(73) Proprietor: Hsu, Cheng-Chien, New Taipei City (TW)
(72) Inventor: Hsu, Cheng-Chien, New Taipei City (TW)
(74) Representative: Gervasi, Gemma

(56) References cited:
- EP-A1- 1 878 928
- EP-A1- 2 700 830
- WO-A1-2008/075895
- WO-A1-2012/016521
- WO-A1-2012/163411
- CN-U- 201 802 740
- US-A1- 2009 108 153

## Description

### BACKGROUND OF THE INVENTION

### 1. Field of the Invention

The present invention relates to a suction cup, especially to a sucking disc with strong suction force and operated by pushing.

### 2. Description of the Prior Art

If people want to hang household goods such as clothes, case supporters, bathroom accessories, kitchen utensils on a wall, they have to nail hooks on the wall. To avoid damaging the wall, a suction cup is commonly used. Generally, the suction cup comprises a rubber, and users just need to press a center of the suction cup toward a wall so that the suction cup adhered to the wall. However, the suction cup comprising the rubber provides weak adherence to hang lighter household goods, such as the bathroom goods and the kitchen goods. Besides, the suction comprising the rubber cannot support the weight of a rod for being a pylon to hang heavier life goods, such as the clothes and the case supporters.

The European publication EP 1,878,928 A1 discloses a suction cup with features of a push-button type or a turning-type used for the windshields of the mechanical vehicles. The push-button type suction cup comprises a housing, a dome connected to the housing and provided with a guiding bushing, and an elastic suction cup with a spindle protruding axially therefrom. The push-button type suction cup features a push-button which slides within the housing. Both sides of the push-button have guiding grooves where ends of guiding pin slide. A user can handle the suction cup with his single hand.

Seeing that the termination of the guiding groove is paralleled to the push button axis, the suction cup is easily unfastened as the user pushes the push-button accidentally and causes the guiding pin to leave the upper portion of the guiding groove.

To overcome the shortcomings, the present invention provides a suction cup with a strong suction force, which can be operated easily to mitigate or obviate the aforementioned problems.

### SUMMARY OF THE INVENTION

The main objective of the invention is to provide a suction cup. The suction cup in accordance with the present invention has the features of claim 1. An embodiment of the invention has
a main body portion and a control portion. The main body portion comprises a main body shell, a base plate, a resilient member, and an actuating pin. The main body shell comprises an upper compartment and a lower compartment. The base plate comprises a fixed rod, and the resilient member is passed through the fixed rod. The base plate is inserted into the lower compartment of the main body shell. The control portion comprises a pushing block, an unlocking block, and a retaining pin. The pushing block comprises a space and is inserted into the upper compartment of the main body shell. The unlocking block comprises a notch and is inserted into the space of the pushing block. The actuating pin is inserted into the upper compartment of the main body shell and the space of the pushing block. The retaining pin is inserted into the notch of the unlocking block and the space of the pushing block.

The present invention provides an easy-operated suction cup. Users just need to push the pushing block of the invention to allow the suction cup to adhere to a wall tightly, and push the unlocking block to allow the suction cup to detach from the wall.

### BRIEF DESCRIPTION OF THE DRAWINGS

Fig. 1 is a perspective exploded view of a first embodiment of a suction cup in accordance with the present invention;
Fig. 2 is a perspective bottom view of a main body shell of the suction cup in Fig. 1;
Fig. 3 is a cross-sectional side view of the suction cup in Fig. 1;
Fig. 4 is a perspective view of the suction cup in Fig. 1;
Fig. 5 is a cross-sectional operational side view of the suction cup in Fig. 1;
Fig. 6 is a perspective view of a second embodiment in accordance with the present invention.
Fig. 7 is a perspective operational view of two suction cups in Fig. 6 used in cooperation;
Fig. 8 is an operational view of a third embodiment of the suction cups in Fig. 6.

### DETAILED DESCRIPTION OF THE PREFERRED EMBODIMENTS

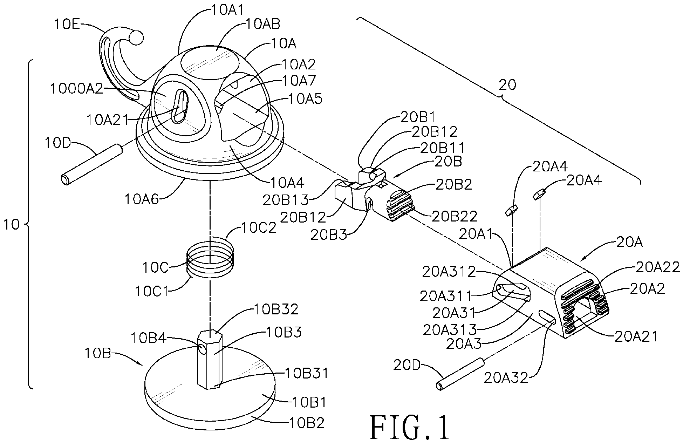

With reference to FIG. 1, in the first embodiment, a suction cup in accordance with the present invention comprises a main body portion 10, a control portion 20, an actuating pin 10D and a retaining pin 20D.

With reference to FIG. 1, the main body portion 10 is a semi-sphere and comprises a main body shell 10A, a base plate 10B, a resilient member 10C, and the actuating pin 10D.

The main body shell 10A comprises a top 10AB, a front end 10A1, two lateral sides 10A2, a back end 10A4, a partition 10A5, an upper compartment, a lower compartment, and a bottom circumference 10A6. The front end 10A1 comprises a hook 10E attached thereto. Each of the lateral sides 10A2 comprises a slot 10A21. The back end 10A4 of the main body shell 10A is opposite to the front end 10A1 of the main body shell 10A and is connected to the lateral sides 10A2 of the main body shell 10A.

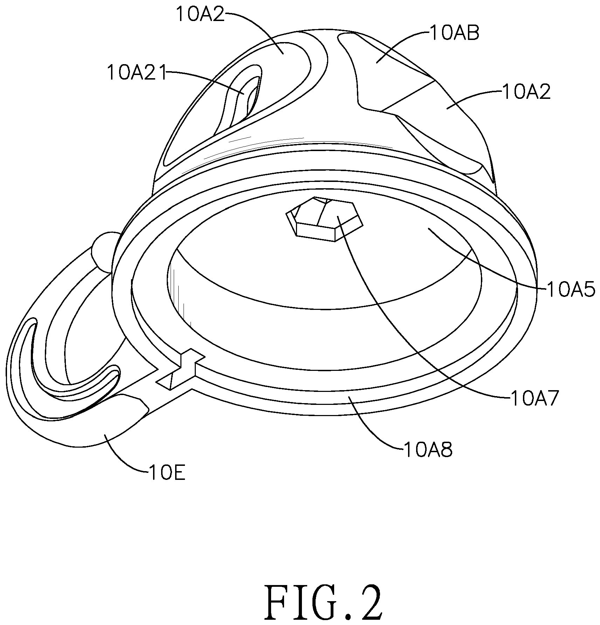

With reference to FIG. 1 and FIG. 2, the partition 10A5 is positioned perpendicularly to the lateral sides 10A2 and below the slots 10A21, and comprises a central through hole 10A7. The upper compartment is surrounded by the top 10AB, the front end 10A1, and the lateral sides 10A2 of the main body shell 10A. The lower compartment is positioned below the upper compartment and surrounded by the partition 10A5, the front end 10A1, the lateral sides 10A2, and the back end 10A4.

The bottom circumference 10A6 is connected to the front end 10A1, the lateral sides 10A2 and the back end 10A4, and comprises an inner rim 10A8.

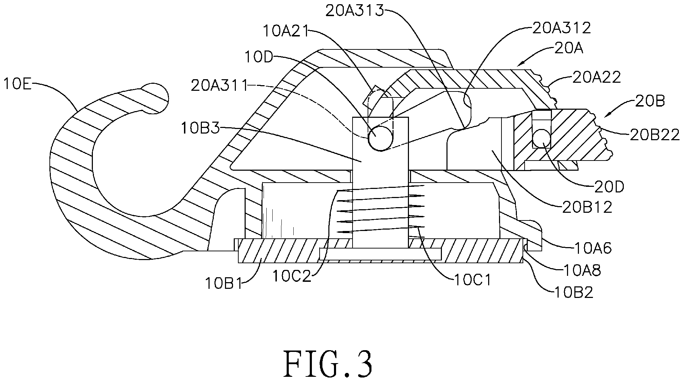

With reference to FIG. 1, the base plate 10B comprises a soft disk 10B1, a central part, an outer rim 10B2 and a fixed rod 10B3 at the bottom circumference. The soft disk 10B1 comprises a surface and a bottom. The bottom of the soft disk 10B1 is adhered to an object. The central part is located in the center of the soft disk 10B1. With reference to FIG. 1 and FIG. 3, the outer rim10B2 of the base plate 10B fits into the inner rim 10A8 of the bottom circumference 10A6 of the main body shell 10A. The fixed rod 10B3 is formed on the central part of the soft disk 10B1, is inserted through the central through hole 10A7 of the partition 10A5 of the main body shell 10A, and comprises a proximal end 10B31, a distal end 10B32, and a via hole 10B4. The proximal end 10B31 is connected to the central part of the soft disk 10B1, and the distal end 10B32 is opposite to the proximal end 10B31. The via hole 10B4 is formed on the distal end 10B32 of the fixed rod 10B3.

With reference to FIG. 1 and FIG. 3, the resilient member 10C, being a spring in the present embodiment, is mounted around the fixed rod 10B3 of the soft disk 10B1 in the lower compartment of the main body shell 10A, and comprises a near end 10C1 and a far end 10C2. The near end 10C1 contacts the surface of the soft disk 10B1, and the far end 10C2 is opposite to the near end 10C1 and contacts the partition 10A5 of the main body shell 10A.

With reference to FIG. 1, the control portion 20 comprises a pushing block 20A and an unlocking block 20B. The pushing block 20A is embedded into the upper compartment of the main body shell 10A and comprises a front end 20A1, two lateral sides 20A3, two pads 20A4, a back end 20A2, and a space.

The lateral sides 20A3 of the pushing block 20A are connected with the front end 20A1 and the back end 20A2, and each side comprises an inclined slot 20A31 and a horizontal slot 20A32. Each of the lateral slots 20A31 is positioned close to and inclined toward the front end 20A1 of the pushing block 20A, and comprises a front portion 20A311 and a back portion 20A312. The front portion 20A311 is closed to the front end 20A1 of the pushing block 20A, and the back portion 20A312 is opposite to the front portion 20A311 of the inclined slot 20A31 and comprises a groove 20A313. The horizontal slots 20A32 are positioned close to the back end 20A2 of the pushing block 20A.

The two pads 20A4 are positioned on the front end 20A1 of the pushing block 20A to decrease impact force generated between the front end 20A1 of the pushing block 20A and the front end 10A1 of the main body shell 10 by embedding the pushing block 20A into the upper compartment of the main body shell 10A.

The back end 20A2 is opposite to the front end 20A1 and comprises an mounting recess 20A21 and embossed lines 20A22. The embossed lines 20A22 allow users to push the back end 20A2 of the pushing block 20A conveniently.

The space is formed inside the pushing block 20A, and is connected to the inclined slots 20A31 of the pushing block 20A, the horizontal slots 20A32 of the pushing block 20A, and the mounting recess 20A21.

With reference to FIG. 1 and FIG 3, the unlocking block 20B is embedded into the space of the pushing block 20A, and comprises a front portion 20B1, a back portion 20B2, a central portion, and a bottom. The front portion 20B1 is U-shaped, and comprises a basal portion 20B11 and two lateral sides 20B 12. The lateral sides 20B 12 are laterally connected to the basal portion 20B11, and comprise inclines 20B 13 decreased gradually away from the basal portion 20B11. The basal portion 20B11 and the lateral sides 20B 12 surround the fixed rod 10B3 of the base plate 10B. The back portion 20B2 is opposite to the front portion 20B1 of the unlocking block 20B and is connected to the basal portion 20B11 of the front portion 20B1, and comprises embossed lines 20B22. The embossed lines 20B22 of the unlocking block 20B are convenient for users to push the unlocking block 20B.

The central portion is defined between the front portion 20B1 and the back portion 20B2 of the unlocking block 20B. The bottom is below the front portion 20B1 and the back portion 20B2, and comprises a notch 20B3 recessed on the central portion.

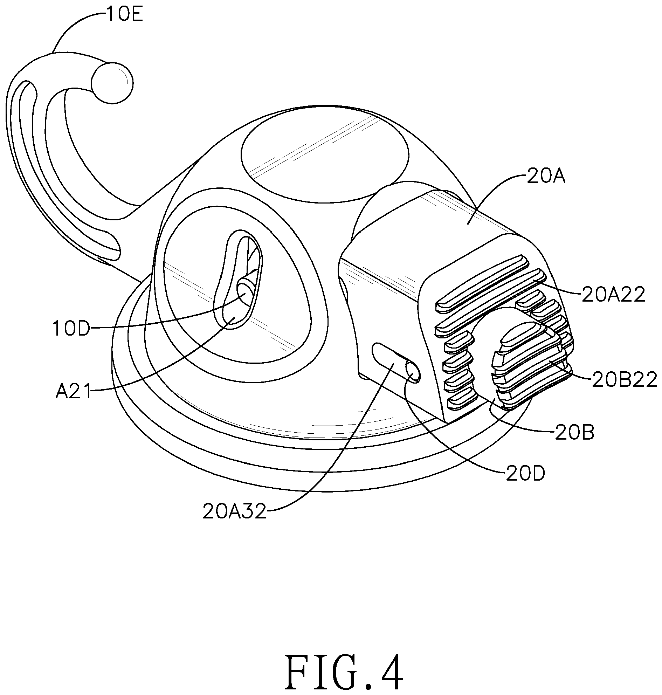

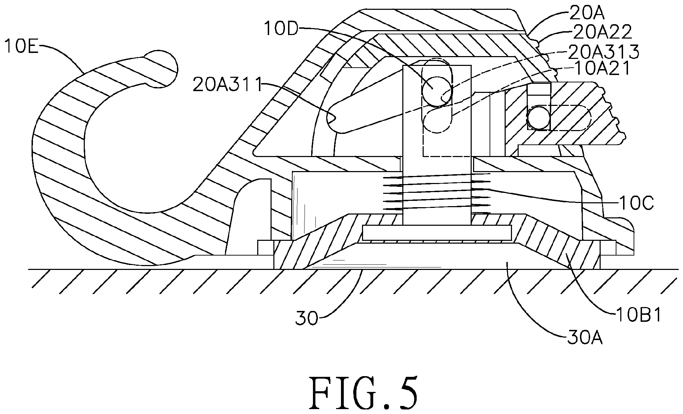

With reference to FIG. 3 and FIG. 4, the actuating pin 10D is inserted into the slots 10A21 of the main body shell 10A, the inclined slots 20A31 of the pushing block 20A, and the via hole 10B4 of the fixed rod 10B3. The actuating pin 10D is mounted in the front portion of the inclined slots 20A31, the horizontal slots 20A32 of the lateral sides of the main body shell 10A, and the notch 20B3 of the unlocking block 20B. The slots 10A21 prevent the actuating pin 10D from blocking between the front end10A1 and the back end 10A4 of the main body shell 10A, and restrict the actuating pin 10D to move up and down.
With reference to FIG. 3 and FIG. 4, the retaining pin 20D is inserted into the horizontal slots 20A32 of the pushing block 20A, and the notch 20B3 of the unlocking block 20B. The retaining pin 20D is positioned close to the back end 20A2 of the pushing block 20A. The horizontal slots 20A32 of the pushing block 20A restrict the retaining pin 20D to move horizontally along with the unlocking block 20B.
When the present invention is in use, with reference to FIG. 3 and FIG. 5, the soft disk 10B1 is attached to a flat surface 30, and the pushing block 20A is pushed into the upper compartment of the main body shell 10A to allow the actuating pin 10D to move from the front portions 20A311of the inclined slots 20A31 of the pushing block 20A to the back portions 20A312 of the inclined slots 20A31 of the pushing block 20A. The actuating pin 10D remains in the grooves 20A313 of the inclined slots 20A31 of the pushing block 20A, and contacts the lateral sides 20B12 of the front portion 20B1 of the unlocking block 20B. In the meanwhile, the pushing block 20Ais fixed in the compartment of the main body shell 10A, and the soft disk 10B1 is bent to form a vacuum space 30A between the soft disk 10B1 and the flat plane 30, and the lower compartment of the main body shell 10A is compressed. Therefore, the suction cup is adhered on the flat surface 30 tightly, and objects can be hung on the hook 10E of the main body shell 10A.

With reference to FIG. 5, pushing the unlocking block 20B into the space of the pushing block 20A allows the lateral sides 20B 12 of the front portion 20B1 of the unlocking block 20B to push the actuating pin 10D to leave the grooves 20A313 of the lateral inclined slots 20A31 of the pushing block 20A. In the meanwhile, the resilient member 10C provides force to push the soft disc 10B1 toward the flat surface 30, allowing releasing vacuum status within the vacuum space 30A. Therefore, the suction cup is easily removed from the flat surface 30.

The suction cup of the invention can be adhered to the flat surface 30 tightly, and it is convenient to users to operate.

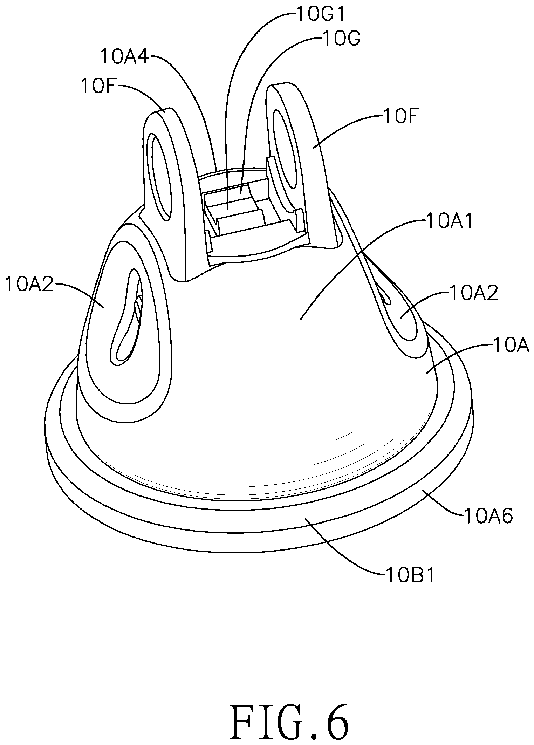

With reference to FIG. 1, FIG. 5 and FIG. 6, the second embodiment is similar to the first embodiment, wherein the main body shell 10A further comprises two fixing collars 10F and a protrusion 10G on the top of the main body shell 10A, instead of the hook 10E formed on the front end of the main body shell 10A. Each of the two fixing collars 10F is parallel to the lateral sides 10A2 of the main body shell 10A, and the protrusion 10G is formed between the two fixing collars and comprises a concave groove 10G1.

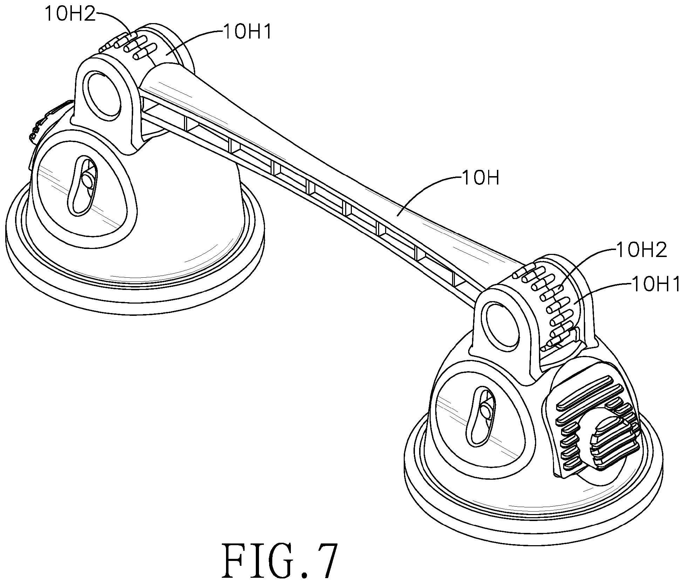

With reference to FIG. 7, a rod 10H comprises two fixed ends 10H1 and multiple projections 10H2. The multiple projections 10H2 are formed surrounding the two fixed ends 10H1 of the rod 10H. The two fixed ends 10H1 of the rod 10H are fixed into the two fixing collars 10F of the main body shell 10A, and one of the multiple projections 10H2 is anchored into the concave groove 10G1 of the protrusion 10G.

As the invention is in use, users can adhere two suction cups of the invention on two different planes by rotating one of the main body shells 10A, and fix the two suction cups by anchoring one of the multiple projections 10H2 into the concave groove 10G1. Various objects can be hung on the pod 10H stably.

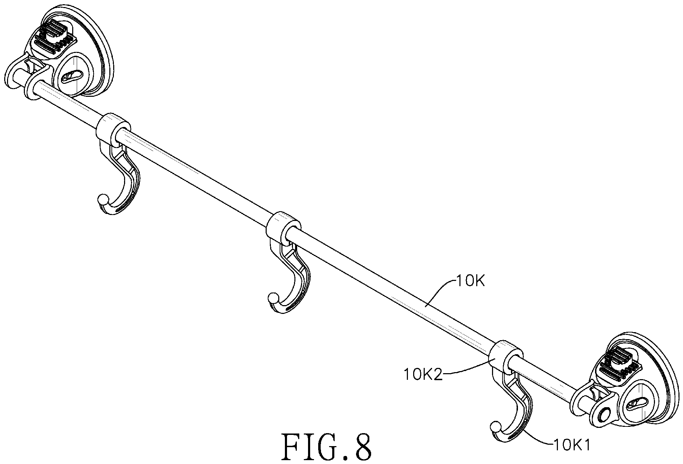

With reference to FIG. 8, the third embodiment is similar to the second embodiment, and comprises a smooth rod 10K and multiple hooks 10K1. One of the hooks 10K comprises a shackle 10K2, and the shackle 10K2 is mounted around the smooth rod 10K.

For operating the invention, users can adhere the two suction cups of the invention on the same plane, and hang objects on the smooth rod 10K and the hooks 10K1.

## Claims

1. A suction cup comprising:
a main body portion (10), comprising
a main body shell (10A) comprising
a top (10AB),
a front end (10A1) connected to the top (10AB),
two lateral sides (10A2, 10A3) connected to the front end (10A1) and the top (10AB), and each of the two lateral sides (10A2, 10A3) comprising a slot (10A21),
a back end (10A4) opposite to the front end (10A1) and connected to the two lateral sides (10A2, 10A3),
a partition (10A5) positioned perpendicularly to the two lateral sides (10A2, 10A3) and below the top (10AB) and the slots (10A21), and comprising a central through hole (10A7),
an upper compartment surrounded by the top (10AB), the front end (10A1), the two lateral sides (10A2, 10A3), and the partition (10A5),
a lower compartment positioned below the upper compartment, and surrounded by the partition (10A5), the front end (10A1), the two lateral sides (10A2, 10A3), and the back end (10A4), and
a bottom circumference (10A6) connected to the front end (10A1), the two lateral sides (10A2, 10A3) and the back end (10A4), and comprising an inner rim (10A8);
a base plate (10B) comprising
a soft disk (10B1),
a central part located in the center of the soft disk (10B1),
an outer rim (10B2) fit into the inner rim (10A8) of the bottom circumference (10A6) of the main body shell (10A),
a fixed rod (10B3) formed on the central part of the soft disk (10B1) and inserted through the central through hole (10A7) of the main body shell (10A), and comprising:
a proximal end (10B31) connected to the central part of the soft disk (10B1),
a distal end (10B32) opposite to the proximal end (10B31), and
a via hole (10B4) formed on the distal end (10B32);
a resilient member (10C) mounted around the fixed rod (10B3) of the soft disk (10B1), and comprising
a near end (10C1) contacting the soft disk (10B1), and
a far end (10C2) opposite to the near end (10C1) and contacting the main body shell (10A);
a control portion (20) having
a pushing block (20A) embedded into the upper compartment of the main body shell (10A), and comprising:
a front end (20A1),
a back end (20A2) opposite to the front end (20A1) of the pushing block (20A), and comprising a mounting recess (20A21),
two lateral sides (20A3) connected with the front end (20A1) and the back end (20A2) of the pushing block (20A), and each of the two lateral sides (20A3) of the pushing block (20A) comprising:
a horizontal slot (20A32) disposed close to the back end (20A2) of the pushing block (20A);
an inclined slot (20A31) disposed close to the front end (20A1) of the pushing block (20A) and inclined toward the pushing block (20A), and the inclined slot (20A31) comprising:
a front portion (20A311) close to the front end (20A1) of the pushing block (20A), and
a back portion (20A312) opposite to the front portion (20A311) of the inclined slot (20A31), and
a space formed inside the pushing block (20A), and connected to the inclined slots (20A31) and the horizontal slots (20A32) of the pushing block (20A) and the mounting recess (20A21), **characterized in that**
the pushing block (20A) has
the back portion (20A312) of the pushing block (20A) comprising a groove (20A313),
an unlocking block (20B) embedded into the space of the pushing block (20A), and comprising:
a front portion (20B1) in a U-shape, and comprising:
a basal portion (20B11), and
two lateral sides (20B12) laterally connected to the basal portion (20B11), and comprising inclines (20B13) decreased gradually away from the basal portion (20B11);
a back portion (20B2) opposite to the front portion (20B1) of the unlocking block (20B) and connected to the basal portion (20B11), and
a central portion defined between the front portion (20B1) and the back portion (20B2) of the unlocking block (20B), and
a bottom below the front portion (20B1) and the back portion (20B2) of the unlocking block (20B), and comprising a notch (20B3) recessed on the central portion;
an actuating pin (10D) inserted into the slots (10A21) of the main body shell (10A), the inclined slots (20A31) of the pushing block (20A), and the via hole (10B4) of the fixed rod (10B3);
a retaining pin (20D) inserted into the horizontal slots (20A32) of the pushing block (20A) and the notch (20B3) of the unlocking block (20B).

2. The suction cup as claimed in claim 1, wherein the pushing block (20A) further comprises at least one pad (20A4) located on the front end (20A1) of the pushing block (20A).

3. The suction cup as claimed in claim 1, wherein the main body portion (10) further comprises a hook (10E) on the front end (10A1) of the main body shell (10A).

4. The suction cup as claimed in claim 1, wherein the main body portion (10) further comprises two fixing collars (10F) formed on the top (10AB) of the main body shell (10A) and each of the two fixing collars (10F) is parallel to the two lateral sides (10A2, 10A3) of the main body shell (10A).

5. The suction cup as claimed in claim 4, wherein the main body portion (10) further comprises a protrusion (10G) formed between the two fixing collars (10F).

6. The suction cup as claimed in claim 5, wherein the protrusion (10G) comprises a concave groove (10G1).

7. The suction cup as claimed in claim 3, wherein the main body portion (10) is a semi-sphere and comprises a cylindrical bottom.

8. The suction cup as claimed in claim 5, wherein the main body portion (10) is a semi-sphere and comprises a cylindrical bottom.

9. The suction cup as claimed in claim 1, wherein the control portion (20) further comprises embossed lines (20A22) on the back end (20A2) of the pushing block (20A).

10. The suction cup as claimed in claim 9, wherein the control portion (20) further comprises embossed lines (20B22) on the back portion (20B2) of the unlocking block (20B).

11. The suction cup as claimed in claim 10, wherein the control portion (20) further comprises two pads (20A4) on the front end (20A1) of the pushing block (20A).

## Patentansprüche

1. Saugnapf, der umfasst:
einen Hauptkörperabschnitt (10), der umfasst:
eine Hauptkörperkapsel (10A), die umfasst:
eine Oberseite (10AB),
ein vorderes Ende (10A1), das mit der Oberseite (10AB) verbunden ist,
zwei Querseiten (10A2, 10A3), die mit dem vorderen Ende (10A1) und mit der Oberseite (10AB) verbunden sind, und wobei jede der zwei Querseiten (10A2, 10A3) einen Schlitz (10A21) umfasst,
ein hinteres Ende (10A4), das dem vorderen Ende (10A1) gegenüberliegt und das mit den zwei Querseiten (10A2, 10A3) verbunden ist,
eine Trennwand (10A5), die senkrecht zu den zwei Querseiten (10A2, 10A3) und unter der Oberseite (10AB) und den Schlitzen (10A21) positioniert ist und die ein mittiges Durchgangsloch (10A7) umfasst,
ein oberes Fach, das von der Oberseite (10AB), von dem vorderen Ende (10A1), von den zwei Querseiten (10A2, 10A3) und von der Trennwand (10A5) umgeben ist,
ein unteres Fach, das unter dem oberen Fach positioniert ist und das von der Trennwand (10A5), von dem vorderen Ende (10A1), von den zwei Querseiten (10A2, 10A3) und von dem hinteren Ende (10A4) umgeben ist, und
einen unteren Umfang (10A6), der mit dem vorderen Ende (10A1), mit den zwei Querseiten (10A2, 10A3) und mit der Rückseite (10A4) verbunden ist und der einen Innenrand (10A8) umfasst;
eine Grundplatte (10B), die umfasst:
eine weiche Scheibe (10B1),
einen Mittelteil, der sich in der Mitte der weichen Scheibe (10B1) befindet,
einen Außenrand (10B2), der in den Innenrand (10A8) des unteren Umfangs (10A6) der Hauptkörperkapsel (10A) passt,
einen festen Stab (10B3), der in dem Mittelteil der weichen Scheibe (10B1) gebildet ist und der durch das mittige Durchgangsloch (10A7) der Hauptkörperkapsel (10A) eingeführt ist und der umfasst:
ein proximales Ende (10B31), das mit dem Mittelteil der weichen Scheibe (10B1) verbunden ist,
ein distales Ende (10B32), das dem proximalen Ende (10B31) gegenüberliegt, und
ein Durchgangsloch (10B4), das an dem distalen Ende (10B32) gebildet ist;
ein federndes Element (10C), das um den festen Stab (10B3) der weichen Scheibe (10B1) montiert ist und das umfasst:
ein nahes Ende (10C1), das die weiche Scheibe (10B1) berührt, und
ein fernes Ende (10C2), das dem nahen Ende (10C1) gegenüberliegt und das die Hauptkörperkapsel (10A) berührt;
einen Steuerabschnitt (20), der aufweist:
einen Druckblock (20A), der in das obere Fach der Hauptkörperkapsel (10A) eingebettet ist und der umfasst:
ein vorderes Ende (20A1),
ein hinteres Ende (20A2), das dem vorderen Ende (20A1) des Druckblocks (20A) gegenüberliegt und das eine Montageaussparung (20A21) umfasst,
zwei Querseiten (20A3), die mit dem vorderen Ende (20A1) und mit dem hinteren Ende (20A2) des Druckblocks (20A) verbunden sind, und wobei jede der zwei Querseiten (20A3) des Druckblocks (20A) umfasst:
einen horizontalen Schlitz (20A32), der in der Nähe des hinteren Endes (20A2) des Druckblocks (20A) angeordnet ist;
einen geneigten Schlitz (20A31), der in der Nähe des vorderen Endes (20A1) des Druckblocks (20A) angeordnet ist und der in Richtung des Druckblocks (20A) geneigt ist, und wobei der geneigte Schlitz (20A31) umfasst:
einen vorderen Abschnitt (20A311) in der Nähe des vorderen Endes (20A1) des Druckblocks (20A), und
einen hinteren Abschnitt (20A312), der dem vorderen Abschnitt (20A311) des geneigten Schlitzes (20A31) gegenüberliegt, und
einen Leerraum, der innerhalb des Druckblocks (20A) gebildet ist und der mit den geneigten Schlitzen (20A31) und mit den horizontalen Schlitzen (20A32) des Druckblocks (20A) und mit der Montageaussparung (20A21) verbunden ist,
**dadurch gekennzeichnet, dass**
der Druckblock (20A) aufweist:
dass der hintere Abschnitt (20A312) des Druckblocks (20A) eine Nut (20A313) umfasst,
einen Entriegelungsblock (20B), der in den Leerraum des Druckblocks (20A) eingebettet ist und der umfasst:
einen vorderen Abschnitt (20B1) in einer U-Form, und der umfasst:
einen Basisabschnitt (20B11), und
zwei Querseiten (20B12), die mit dem Basisabschnitt (20B11) seitlich verbunden sind und die Neigungen (20B13) umfassen, die von dem Basisabschnitt (20B11) weg allmählich verringert sind;
einen hinteren Abschnitt (20B2), der dem vorderen Abschnitt (20B1) des Entriegelungsblocks (20B) gegenüberliegt und der mit dem Basisabschnitt (20B11) verbunden ist, und
einen Mittelabschnitt, der zwischen dem vorderen Abschnitt (20B1) und dem hinteren Abschnitt (20B2) des Entriegelungsblocks (20B) definiert ist, und
eine Unterseite unter dem vorderen Abschnitt (20B1) und dem hinteren Abschnitt (20B2) des Entriegelungsblocks (20B) und die eine Kerbe (20B3) umfasst, die in dem Mittelabschnitt ausgespart ist;
einen Betätigungsstift (10D), der in die Schlitze (10A21) der Hauptkörperkapsel (10A), in die geneigten Schlitze (20A31) des Druckblocks (20A) und in das Durchgangsloch (10B4) des festen Stabs (20B3) eingeführt ist;
einen Haltestift (20D), der in die horizontalen Schlitze (20A32) des Druckblocks (20A) und in die Kerbe (20B3) des Entriegelungsblocks (20B) eingeführt ist.

2. Saugnapf gemäß Anspruch 1, wobei der Druckblock (20A) ferner wenigstens ein Druckstück (20A4) umfasst, das sich an dem vorderen Ende (20A1) des Druckblocks (20A) befindet.

3. Saugnapf gemäß Anspruch 1, wobei der Hauptkörperabschnitt (10) ferner an dem vorderen Ende (10A1) der Hauptkörperkapsel (10A) einen Haken (10E) umfasst.

4. Saugnapf gemäß Anspruch 1, wobei der Hauptkörperabschnitt (10) ferner zwei Befestigungsringe (10F), die an der Oberseite (10AB) der Hauptkörperkapsel (10A) gebildet sind und wobei jeder der zwei Befestigungsringe (10F) parallel zu den zwei Querseiten (10A2, 10A3) der Hauptkörperkapsel (10A) ist, umfasst.

5. Saugnapf gemäß Anspruch 4, wobei der Hauptkörperabschnitt (10) ferner einen zwischen den zwei Befestigungsringen (10F) gebildeten Vorsprung (10G) umfasst.

6. Saugnapf gemäß Anspruch 5, wobei der Vorsprung (10G) eine konkave Nut (10G1) umfasst.

7. Saugnapf gemäß Anspruch 3, wobei der Hauptkörperabschnitt (10) eine Halbkugel ist und ein zylindrisches Unterteil umfasst.

8. Saugnapf gemäß Anspruch 5, wobei der Hauptkörperabschnitt (10) eine Halbkugel ist und ein zylindrisches Unterteil umfasst.

9. Saugnapf gemäß Anspruch 1, wobei der Steuerabschnitt (20) ferner an dem hinteren Ende (20A2) des Druckblocks (20A) Prägelinien (20A22) umfasst.

10. Saugnapf gemäß Anspruch 9, wobei der Steuerabschnitt (20) ferner an dem hinteren Abschnitt (20B2) des Entriegelungsblocks (20B) Prägelinien (20B22) umfasst.

11. Saugnapf gemäß Anspruch 10, wobei der Steuerabschnitt (20) ferner an dem vorderen Ende (20A1) des Druckblocks (20A) zwei Druckstücke (20A4) umfasst.

## Revendications

1. Ventouse comprenant :
une partie de corps principal (10) comprenant
une enveloppe de corps principal (10A) comprenant
une partie supérieure (10AB),
une extrémité avant (10A1) connectée à la partie supérieure (10AB),
deux côtés latéraux (10A2, 10A3) connectés à l'extrémité avant (10A1) et à la partie supérieure (10AB), et chacun des deux côtés latéraux (10A2, 10A3) comprenant une fente (10A21),
une extrémité arrière (10A4) opposée à l'extrémité avant (10A1) et connectée aux deux côtés latéraux (10A2, 10A3),
une cloison (10A5) positionnée perpendiculairement aux deux côtés latéraux (10A2, 10A3) et au-dessous de la partie supérieure (10AB) et des fentes (10A21), et comprenant un trou passant central (10A7),
un compartiment supérieur entouré par la partie supérieure (10AB), l'extrémité avant (10A1), les deux côtés latéraux (10A2, 10A3) et la cloison (10A5),
un compartiment inférieur positionné au-dessous du compartiment supérieur et entouré par la cloison (10A5), l'extrémité avant (10A1), les deux côtés latéraux (10A2, 10A3) et l'extrémité arrière (10A4), et
une circonférence inférieure (10A6) connectée à l'extrémité avant (10A1), aux deux côtés latéraux (10A2, 10A3) et à l'extrémité arrière (10A4), et comprenant un rebord intérieur (10A8) ;
une plaque de base (10B) comprenant
un disque souple (10B1),
une partie centrale située au centre du disque souple (10B1),
un rebord extérieur (10B2) ajusté dans le rebord intérieur (10A8) de la circonférence inférieure (10A6) de l'enveloppe de corps principal (10A),
une tige fixe (10B3) formée sur la partie centrale du disque souple (10B1) et insérée à travers le trou passant central (10A7) de l'enveloppe de corps principal (10A), et comprenant :
une extrémité proximale (10B31) connectée à la partie centrale du disque souple (10B1),
une extrémité distale (10B32) opposée à l'extrémité proximale (10B31), et
un trou traversant (10B4) formé sur l'extrémité distale (10B32) ;
un élément élastique (10C) monté autour de la tige fixe (10B3) du disque souple (10B1), et comprenant
une extrémité proche (10C1) en contact avec le disque souple (10B1), et
une extrémité éloignée (10C2) opposée à l'extrémité proche (10C1) et en contact avec l'enveloppe de corps principal (10A) ;
une partie de commande (20) ayant
un bloc de poussée (20A) incorporé dans le compartiment supérieur de l'enveloppe de corps principal (10A), et comprenant :
une extrémité avant (20A1),
une extrémité arrière (20A2) opposée à l'extrémité avant (20A1) du bloc de poussée (20A), et comprenant un évidement de montage (20A21),
deux côtés latéraux (20A3) connectés à l'extrémité avant (20A1) et à l'extrémité arrière (20A2) du bloc de poussée (20A), et chacun des deux côtés latéraux (20A3) du bloc de poussée (20A) comprenant :
une fente horizontale (20A32) disposée proche de l'extrémité arrière (20A2) du bloc de poussée (20A) ;
une fente inclinée (20A31) disposée proche de l'extrémité avant (20A1) du bloc de poussée (20A) et inclinée vers le bloc de poussée (20A), et la fente inclinée (20A31) comprenant :
une partie avant (20A311) proche de l'extrémité avant (20A1) du bloc de poussée (20A), et
une partie arrière (20A312) opposée à la partie avant (20A311) de la fente inclinée (20A31), et
un espace formé à l'intérieur du bloc de poussée (20A), et connecté aux fentes inclinées (20A31) et aux fentes horizontales (20A32) du bloc de poussée (20A) et à l'évidement de montage (20A21),
**caractérisée en ce que**
le bloc de poussée (20A) a
la partie arrière (20A312) du bloc de poussée (20A) comprenant une rainure (20A313),
un bloc de déverrouillage (20B) incorporé dans l'espace du bloc de poussée (20A), et comprenant :
une partie avant (20B1) en forme de U, et comprenant :
une partie basale (20B11), et
deux côtés latéraux (20B12) connectés latéralement à la partie basale (20B11), et
comprenant des inclinaisons (20B13) diminuées progressivement en s'éloignant de la partie basale (20B11) ;
une partie arrière (20B2) opposée à la partie avant (20B1) du bloc de déverrouillage (20B), et connectée à la partie basale (20B11), et
une partie centrale définie entre la partie avant (20B1) et la partie arrière (20B2) du bloc de déverrouillage (20B), et
une partie inférieure au-dessous de la partie avant (20B1) et de la partie arrière (20B2) du bloc de déverrouillage (20B), et comprenant une encoche (20B3) évidée dans la partie centrale ;
une goupille d'actionnent (10D) insérée dans les fentes (10A21) de l'enveloppe de corps principal (10A), les fentes inclinées (20A31) du bloc de poussée (20A) et le trou traversant (10B4) de la tige fixe (10B3) ;
une goupille de retenue (20D) insérée dans les fentes horizontales (20A32) du bloc de poussée (20A) et l'encoche (20B3) du bloc de déverrouillage (20B).

2. Ventouse selon la revendication 1, dans laquelle le bloc de poussée (20A) comprend en outre au moins un coussinet (20A4) situé sur l'extrémité avant (20A1) du bloc de poussée (20A).

3. Ventouse selon la revendication 1, dans laquelle la partie de corps principal (10) comprend en outre un crochet (10E) sur l'extrémité avant (10A1) de l'enveloppe de corps principal (10A).

4. Ventouse selon la revendication 1, dans laquelle la partie de corps principal (10) comprend en outre deux colliers de fixation (10F) formés sur la partie supérieure (10AB) de l'enveloppe de corps principal (10A) et chacun des deux colliers de fixation (10F) est parallèle aux deux côtés latéraux (10A2, 10A3) de l'enveloppe de corps principal (10A).

5. Ventouse selon la revendication 4, dans laquelle la partie de corps principal (10) comprend en outre une saillie (10G) formée entre les deux colliers de fixation (10F).

6. Ventouse selon la revendication 5, dans laquelle la saillie (10G) comprend une rainure concave (10G1).

7. Ventouse selon la revendication 3, dans laquelle la partie de corps principal (10) est une demi-sphère et comprend une partie inférieure cylindrique.

8. Ventouse selon la revendication 5, dans laquelle la partie de corps principal (10) est une demi-sphère et comprend une partie inférieure cylindrique.

9. Ventouse selon la revendication 1, dans laquelle la partie de commande (20) comprend en outre des lignes en relief (20B22) sur la partie arrière (20A2) du bloc de poussée (20A).

10. Ventouse selon la revendication 9, dans laquelle la partie de commande (20) comprend en outre des lignes en relief (20B22) sur la partie arrière (20B2) du bloc de déverrouillage (20B).

11. Ventouse selon la revendication 10, dans laquelle la partie de commande (20) comprend en outre deux coussinets (20A4) sur l'extrémité avant (20A1) du bloc de poussée (20A).
